# EUROPÄISCHE PATENTANMELDUNG

(11) **EP 4 644 040 A1**
(43) Veröffentlichungstag der Anmeldung: **05.11.2025**
(21) Anmeldenummer: 24172979.7
(22) Anmeldetag: 29.04.2024
(51) Int. Cl.: B23Q 3/06, A61C 13/00

(54) **WERKZEUGLOSER SCHNELLSPANNHALTER**

(71) Anmelder: Ivoclar Vivadent AG, 9494 Schaan (LI)
(72) Erfinder: Meier, Patrick, 6713 Ludesch (AT); Habit, Andreas, 6774 Tschagguns (AT); Gantioler, Andreas, 6700 Bludenz (AT)
(74) Vertreter: Baldus, Oliver

(57) **Zusammenfassung**

Die vorliegende Erfindung betrifft einen Spannhalter (100) für einen dentalen Rohling (103), mit einem ersten Halterteil (105-1) zum Einlegen des dentalen Rohlings (103); einem zweiten Halterteil (105-2), das mit dem ersten Halterteil (105-1) in Verbindung steht oder koppelbar ist; einer Spannvorrichtung (125) zum Ausüben einer Spannkraft auf den dentalen Rohling (103) zwischen dem ersten Halterteil (105-1) und dem zweiten Halterteil (105-2); und einem Pneumatikelement (107-1, ..., 107-4) zum Aufheben oder Erzeugen der Spannkraft.

## Beschreibung

Die vorliegende Erfindung betrifft einen Spannhalter für einen dentalen Rohling und ein Verfahren zum Einspannen eines dentalen Rohlings.

Es ist die technische Aufgabe der vorliegenden Erfindung, das Einspannen eines dentalen Rohlings in eine Bearbeitungsmaschine zu beschleunigen und zu vereinfachen.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die vorliegende Aufgabe durch einen Spannhalter für einen dentalen Rohling gelöst, mit einem ersten Halterteil zum Einlegen des dentalen Rohlings; einem zweiten Halterteil für den dentalen Rohling, das mit dem ersten Halterteil in Verbindung steht oder koppelbar ist; einer Spannvorrichtung zum Ausüben einer Spannkraft auf den dentalen Rohling zwischen dem ersten Halterteil und dem zweiten Halterteil; und einem Pneumatikelement zum Aufheben oder Erzeugen der Spannkraft. Der Spannhalter klemmt den dentalen Rohling mittels einer Spannkraft zwischen dem ersten Halterteil und dem zweiten Halterteil ein und hält diesen in Position. Durch das automatisch betreibbare Pneumatikelement wird der technische Vorteil erreicht, dass diese Spannkraft durch einen Luftdruck kompensiert werden kann, so dass anschließend das erste oder zweite Halterteil von dem jeweils anderen Halterteil gekoppelt oder gelöst werden kann. Das Einspannen und Lösen des dentalen Rohlings können dann ohne Werkzeug durchgeführt werden. Dadurch beschleunigt sich ein Einspannen und Lösen des dentalen Rohlings in den Spannhalter erheblich.

In einer technisch vorteilhaften Ausführungsform des Spannhalters umfasst die Spannvorrichtung eine Feder. Dadurch wird beispielsweise der technische Vorteil erreicht, dass der dentale Rohling auf einfache Weise zwischen dem ersten und dem zweiten Halterteil eingeklemmt werden kann.

In einer weiteren technisch vorteilhaften Ausführungsform des Spannhalters beaufschlagt die Feder einen Pneumatikkolben mit der Spannkraft. Dadurch wird beispielsweise der technische Vorteil erreicht, dass ein kompakter Aufbau erreicht wird. Durch die Verwendung von vorgespannten Kolben kann die Spannkraft auch ohne Druckluft aufrechterhalten werden.

In einer weiteren technisch vorteilhaften Ausführungsform des Spannhalters umfasst die Spannvorrichtung eine Feder hinter dem Pneumatikkolben. Dadurch wird beispielsweise der technische Vorteil erreicht, dass das obere Halteteil einfach durch die Federkraft gelöst werden kann und der dentale Rohling auf einfache Weise entnommen werden kann.

Durch die Beaufschlagung mit Druckluft auf den Pneumatikkolben, wird die Spannkraft zwischen den Halterteilen erzielt.

In einer weiteren technisch vorteilhaften Ausführungsform des Spannhalters umfasst die Spannvorrichtung eine Feder vor dem Kolben. Dadurch wird beispielsweise der technische Vorteil erreicht, dass ein kompakter Aufbau erreicht wird. Durch die Verwendung von vorgespannten Kolben kann die Spannkraft auch ohne Druckluft aufrechterhalten werden und die Endspannung wird durch Einführen eines Bolzens durch eine Öffnung am Boden erreicht.

In einer weiteren technisch vorteilhaften Ausführungsform des Spannhalters umfasst der Pneumatikkolben ein bewegliches Spannelement zum Koppeln mit dem zweiten Halterteil. Das Spannelement ist beispielsweise ein Spannstift, mit dem eine Zugkraft von dem einen Halterelement auf das andere Halterelement übertragen wird. Dadurch wird beispielsweise der technische Vorteil erreicht, dass die Halterteile über das Spannelement gekoppelt werden können.

In einer weiteren technisch vorteilhaften Ausführungsform des Spannhalters ist das Pneumatikelement innerhalb des ersten oder zweiten Halterteils angeordnet. Dadurch wird beispielsweise der technische Vorteil erreicht, dass ein kompakter und integraler Aufbau erreicht wird und die Pneumatikelemente gegen Verschmutzungen im Fräsbereich geschützt sind.

In einer weiteren technisch vorteilhaften Ausführungsform des Spannhalters umfasst das Pneumatikelement zumindest einen Pneumatikzylinder. Der Pneumatikzylinder kann einen kreisförmigen, ovalen oder eckigen Querschnitt aufweisen, beispielsweise vier-, sechs- oder achteckig. Dadurch wird beispielsweise der technische Vorteil erreicht, dass das Pneumatikelement auf einfache Weise realisiert werden kann.

In einer weiteren technisch vorteilhaften Ausführungsform des Spannhalters umfasst der Spannhalter mehrere Pneumatikelemente. Dadurch wird beispielsweise der technische Vorteil erreicht, dass eine höhere Spannkraft erreicht wird und die Spannkraft gleichmäßig aufgehoben werden kann.

In einer weiteren technisch vorteilhaften Ausführungsform des Spannhalters sind die Pneumatikelemente um eine Aussparung zum Einlegen des dentalen Rohlings herum verteilt. Dadurch wird beispielsweise der technische Vorteil erreicht, dass eine gleichmäßige Freigabe des dentalen Rohlings erreicht wird.

In einer weiteren technisch vorteilhaften Ausführungsform des Spannhalters sind die Pneumatikelemente durch einen gemeinsamen Luftkanal miteinander verbunden. Dadurch wird beispielsweise der technische Vorteil erreicht, dass die Pneumatikelemente gemeinsam betätigt werden können.

In einer weiteren technisch vorteilhaften Ausführungsform des Spannhalters ist das erste Halterteil oder das zweite Halterteil für den dentalen Rohling durch eine Drehbewegung oder Rastbewegung mit dem ersten Halterteil oder mit dem zweiten Halterteil in Verbindung steht oder koppelbar. Dadurch wird beispielsweise der technische Vorteil erreicht, dass der dentale Rohling auf eine schnelle und einfache Weise eingespannt werden kann.

In einer weiteren technisch vorteilhaften Ausführungsform des Spannhalters umfasst der Spannhalter einen Druckluftanschluss, der in einer mechanischen Schnittstelle zum Befestigen des Spannhalters an einer Bearbeitungsmaschine integriert ist oder einen Druckluftanschluss für eine externe Zuführung von Druckluft. Durch den Druckluftanschluss kann das erste und/oder zweite Halterteil mit Druckluft versorgt werden Dadurch wird beispielsweise der technische Vorteil erreicht, dass der Druckluftanschluss gleichzeitig mit der Befestigung des Spannhalters in einer Herstellungsmaschine hergestellt werden kann. Der dentale Rohling kann in diesem Fall auch mit einer externen Druckluftvorrichtung über den Druckluftanschluss im Spannhalter eingespannt oder gelöst werden. Anschließend wird der Spannhalter zusammen mit dem dentalen Rohling in der Herstellungsvorrichtung befestigt oder aus der Herstellungsvorrichtung entnommen.

Gemäß einem zweiten Aspekt wird die vorliegende Aufgabe durch einen Spannhalter für einen dentalen Rohling gelöst, mit einem ersten Halterteil zum Einlegen des dentalen Rohlings; einem zweiten Halterteil für den dentalen Rohling, das mit dem ersten Halterteil in Verbindung steht oder koppelbar ist; einer Spannvorrichtung zum Ausüben einer Spannkraft auf den dentalen Rohling zwischen dem ersten Halterteil und dem zweiten Halterteil; und einem Aufhebungselement zum Aufheben der Spannkraft. Das Aufhebungselement ist jedes automatisch betreibbare Element, mit dem die Spannkraft der Spannvorrichtung aufgehoben werden kann. Das Aufhebungselement kann elektrisch, pneumatisch, mechanisch oder auf andere Weise betreibbar sein. Ansonsten kann der Spannhalter nach dem zweiten Aspekt auf die gleiche Weise wie der Spannhalter nach dem ersten Aspekt ausgebildet sein. Durch den Spannhalter werden die gleichen technischen Vorteile wie durch den Spannhalter nach dem ersten Aspekt erreicht.

In einer technisch vorteilhaften Ausführung des Spannhalters umfasst der Spannhalter mehrere Aufhebungselemente zum Aufheben der Spannkraft. Dadurch wird beispielsweise der technische Vorteil erreicht, dass die Spannkraft an mehreren Stellen aufgehoben werden kann.

In einer weiteren technisch vorteilhaften Ausführung des Spannhalters sind die Aufhebungselemente um eine Aussparung zum Einlegen des dentalen Rohlings herum verteilt. Dadurch wird beispielsweise der technische Vorteil erreicht, dass die Spannkraft gleichmäßig aufgehoben werden kann.

In einer weiteren technisch vorteilhaften Ausführung des Spannhalters sind die Aufhebungselemente einzeln oder gemeinsam betätigbar. Dadurch wird beispielsweise der technische Vorteil erreicht, dass die Spannkraft effizient aufgehoben werden kann.

In einer weiteren technisch vorteilhaften Ausführung des Spannhalters umfasst der Spannhalter eine Schnittstelle zum Zuführen von Energie zu dem Aufhebungselement, die in einer mechanischen Schnittstelle zum Befestigen des Spannhalters an einer Bearbeitungsmaschine oder externen Vorrichtung integriert ist. Dadurch wird beispielsweise der technische Vorteil erreicht, dass eine gleichzeitige Kopplung des Aufhebungselementes beim Befestigen des Spannhalters erreicht wird.

Gemäß einem dritten Aspekt wird die vorliegende Aufgabe durch ein Verfahren zum Einspannen eines dentalen Rohlings gelöst, mit den Schritten eines Einlegens des dentalen Rohlings in ein erstes Halterteil; eines Koppelns des ersten Halterteils mit einem zweiten Halterteil für den dentalen Rohling; eines Ausübens einer Spannkraft auf den dentalen Rohling zwischen dem ersten Halterteil und dem zweiten Halterteil; und eines Aufhebens der Spannkraft durch ein Aufhebungselement. Durch das Verfahren werden die gleichen technischen Vorteile wie durch den Spannhalter nach dem ersten Aspekt erreicht.

In einer technisch vorteilhaften Ausführungsform des Verfahrens ist der dentale Rohling mittels der Spannkraft zwischen dem ersten Halterteil und dem zweiten Halterteil eingeklemmt. Dadurch wird beispielsweise der technische Vorteil erreicht, dass der dentale Rohling auf einfache Weise eingespannt werden kann.

In einer weiteren technisch vorteilhaften Ausführungsform des Verfahrens wird die Druckluft zu mehreren Pneumatikelementen über einen gemeinsamen Luftkanal zugeführt. Dadurch wird beispielsweise der technische Vorteil erreicht, dass die Pneumatikelemente gemeinsam betätigt werden können. Dadurch wird das Koppeln oder Lösen des ersten und des zweiten Halteteils ermöglicht.

In einer weiteren technisch vorteilhaften Ausführungsform des Verfahrens werden die Aufhebungselemente über eine externe Vorrichtung betätigt, die außerhalb einer Herstellungsvorrichtung angeordnet ist. Dadurch wird beispielsweise der technische Vorteil erreicht, dass der dentale Rohling auch außerhalb der Herstellungsvorrichtung eingelegt werden kann und der Spannhalter zusammen mit dem dentalen Rohling in die Herstellungsvorrichtung eingesetzt werden kann.

Ausführungsbeispiele der Erfindung sind in den Zeichnungen dargestellt und werden im Folgenden näher beschrieben.

Es zeigen:
- Fig. 1: eine perspektivische Ansicht eines Spannhalters für einen dentalen Rohling;
- Fig. 2: eine weitere perspektivische Ansicht des Spannhalters für den dentalen Rohling im entkoppelten Zustand;
- Fig. 3: eine Aufsicht auf den Spannhalter für den dentalen Rohling;
- Fig. 4: eine seitliche Querschnittsansicht des Spannhalters für den dentalen Rohling;
- Fig. 5: eine seitliche vergrößerte Querschnittsansicht des Spannelements;
- Fig. 6: eine Querschnittsansicht des Spannhalters für den dentalen Rohling von oben;
- Fig. 7: eine Seitenansicht des Spannhalters für den dentalen Rohling; und
- Fig. 8: eine mechanische Auslegung des Spannhalters; und
- Fig. 9: ein Blockdiagramm eines Verfahrens zum Einspannen des dentalen Rohlings.

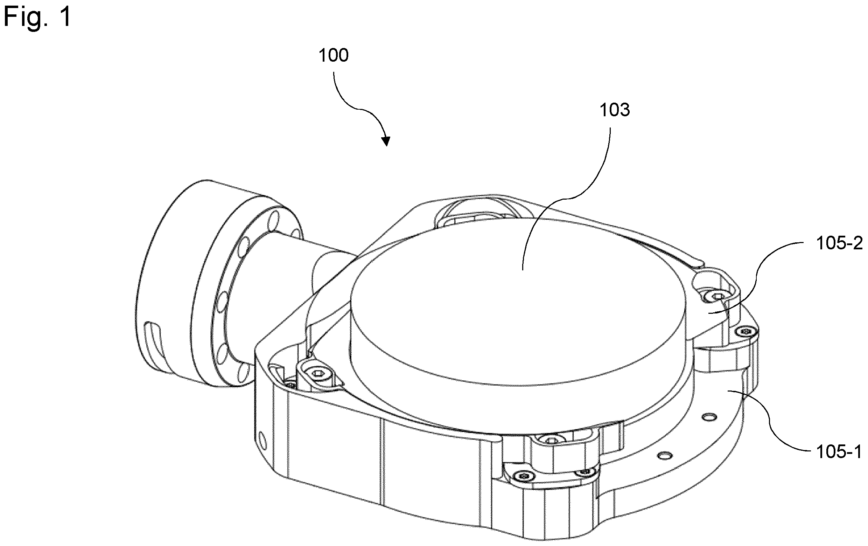

Fig. 1 zeigt eine perspektivische Ansicht eines Spannhalters 100 für einen dentalen Rohling 103. Der dentale Rohling ist beispielsweise durch eine Runde kreisförmige Scheibe gebildet. Es sind aber auch 4- oder 6-kantige Rohlinge denkbar. Der dentale Rohling 103 ist beispielsweise aus Zirkondioxid oder einem anderen Material gebildet. Aus dem dentalen Rohling 103 können unterschiedliche Dentalobjekte in einer Bearbeitungsmaschine herausgefräst werden.

Zu diesem Zweck wird der dentale Rohling 103 in den Spannhalter 100 eingespannt, so dass dieser während der Herstellung gehalten und zusammen mit dem Spannhalter 100 in der Bearbeitungsmaschine bewegt werden kann. Der Spannhalter 100 umfasst die beiden Halterteile 105-1 und 105-2, die beispielsweise aus Metall gebildet sind.

Der dentale Rohling 103 wird zwischen den beiden Halterteilen 105-1 und 105-2 mittels einer Spannkraft gehalten. Das obere Halterteil 105-2 ist vom unteren Halterteil 105-1 mittels einer Drehbewegung lösbar. Das untere Halterteil 105-1 umfasst eine Aussparung, in der der dentale Rohling 103 liegt.

Der Spannhalter 100 kann auch so ausgestaltet sein, dass das erste Halterteil 105-1 und das zweite Halterteil 105-2 mittels Führungselementen voneinander wegbewegt werden können. Die Führungselemente dienen dabei gleichzeitig als Spannelemente. In diesem Fall kann der dentale Rohling 103 über den entstehenden Spalt zwischen dem ersten und dem zweiten Halterteil 105-1 und 105-2 eingefügt und eingespannt werden.

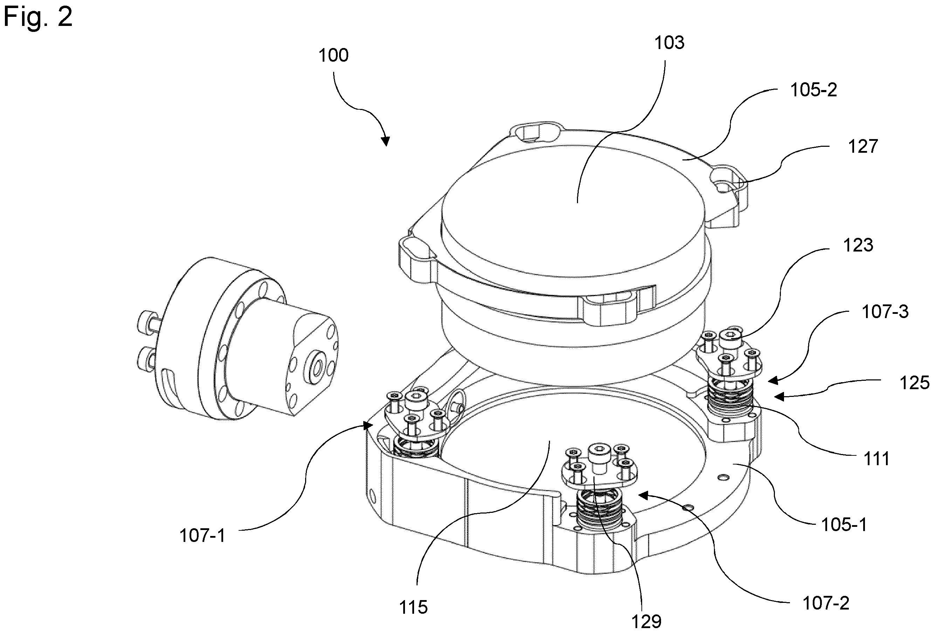

Fig. 2 zeigt eine weitere perspektivische Ansicht des Spannhalters 100 für den dentalen Rohling 103 im entkoppelten Zustand der Halterteile 105-1 und 105-2. Die Kopplung des ersten Halterteils 105-1 und des zweiten, C-förmigen Halterteils 105-2 erfolgt über die beweglichen Spannelemente 123, in die das zweite Halterteil 105-2 einrasten kann. Die Spannelemente 123 werden dabei in Kopplungsöffnungen 127 eingesetzt, die in dem zweiten Halterteil 105-2 gebildet sind. Die beiden Halterteile 105-1 und 105-2 können auch ringförmig sein oder einen geschlossenen Rahmen aufweisen.

Um die Kopplung der zwei Halteteile 105-1 und 105-2 zu ermöglichen, werden vorab die beweglichen Spannelemente mittels des pneumatischen Drucks nach außen gedruckt, und damit die Spannkraft der Spannelemente aufgehoben. Anschließend wird das Halterteil 105-2 gedreht, um einen Anschlag, Reib- und/oder Formschluss zwischen den Kopplungsöffnungen 127 und den Spannelementen 123 zu erreichen. Für den Formschluss kann die Geometrie der Kopplungsöffnungen 127 angepasst werden. Nach dem Koppeln der beiden Halterteile 105-1 und 105-2 kann die Spannkraft auf den dentalen Rohling 103 mittels der Federn 111 über die Spannelemente 123 aufrechterhalten werden. Durch die Federn 111 wird eine Spannvorrichtung 125 zum Ausüben einer Spannkraft zwischen den Halterteilen 105-1 und 105-2 verwirklicht.

Innerhalb des ersten Halterteils 105-1 sind mehrere Pneumatikelemente 107-1, ..., 107-3 als Aufhebungselemente um die Aussparung 115 herum angeordnet. Die Pneumatikelemente 107-1, ..., 107-3 sind Antriebsvorrichtungen, in denen Druckluft als Arbeitsmedium verwendet wird. Die Pneumatikelemente 107-1, ..., 107-3 umfassen jeweils einen Pneumatikzylinder 109, in dem ein beweglicher Pneumatikkolben 113 angeordnet ist. Die Federn 111 beaufschlagen die Pneumatikkolben mit der Spannkraft. Diese Spannkraft wird über die beweglichen Spannelemente 123 auf das zweite Halterteil 105-2 übertragen.

Durch die Verwendung von beweglichen Pneumatikkolben anstatt von Schrauben kann ein werkzeugloses Einspannen des dentalen Rohlings 103 erreicht werden. Dadurch wird ein werkzeugloses Spannsystem erreicht, dass zuverlässig die Materialscheiben der dentalen Rohlinge 103 einspannen kann.

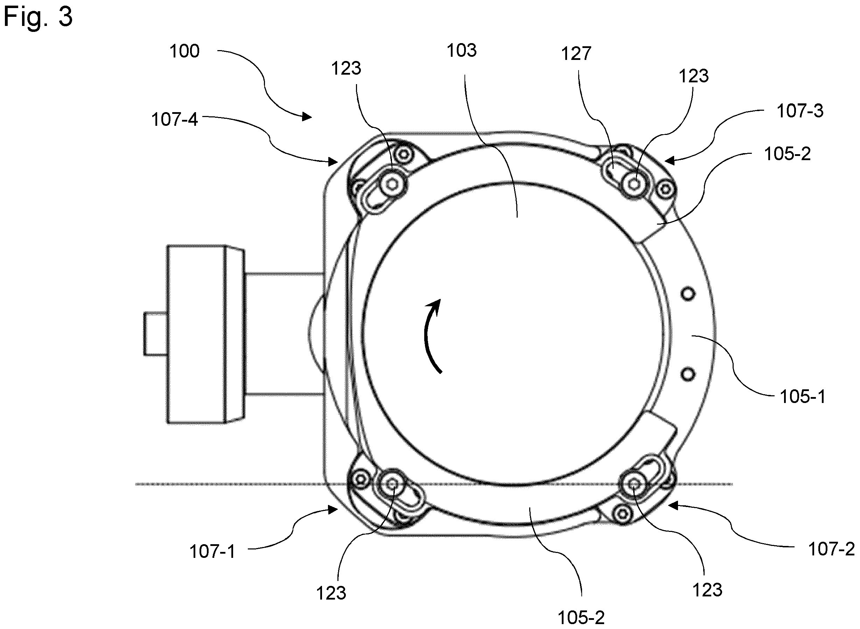

Fig. 3 zeigt eine Aufsicht auf den Spannhalter 100. Beim Einlegen des dentalen Rohlings 103 wird das zweite Halterteil 105-2 in der gezeigten Position zunächst auf das erste Halterteil 105-1 aufgesetzt. Dabei werden die Spannelemente 123 in die Kopplungsöffnungen 127 eingesetzt. Danach wird das zweite Halterteil 105-2 in Pfeilrichtung gedreht, so dass eine mechanische Kopplung mit den Spannelementen 123 stattfindet. Dabei gleitet ein Kopf der Spannelemente 123 über seitliche Vorsprünge, die innerhalb der Kopplungsöffnungen 127 angeordnet sind.

Die Spannelemente 123 befinden sich dabei in einer herausgedrückten Position, die durch die Pneumatikelemente 107-1, ..., 107-4 bewirkt wird. Zu diesem Zweck werden die Pneumatikelemente 107-1, ..., 107-4 mit einem Druck beaufschlagt, so dass sich die Pneumatikkolben mit den Spannelementen 123 nach außen bewegen und die Drehbewegung des zweiten Halterteils 105-2 ermöglicht wird.

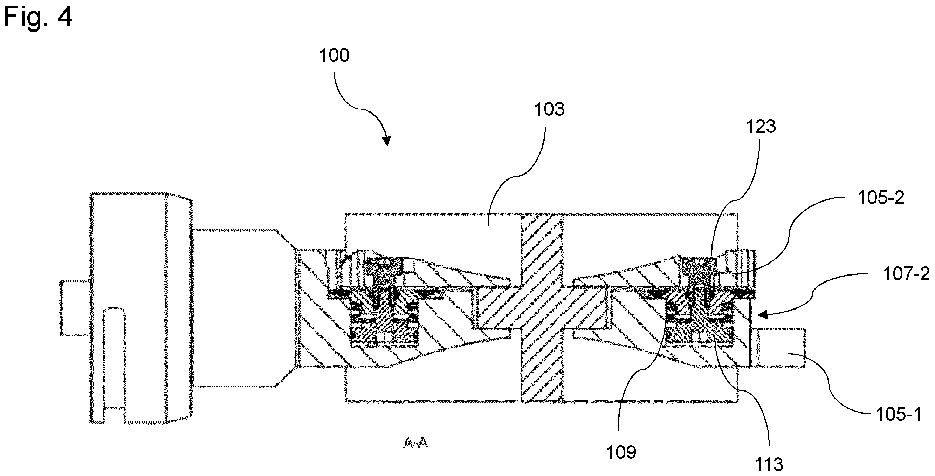

Fig. 4 zeigt eine Querschnittsansicht des Spannhalters 100 für den dentalen Rohling 103. Die nach außen ragenden Spannelemente 123 umfassen ein Innengewinde, das auf ein Außengewinde der Pneumatikkolben 113 aufgedreht ist. Die Spannelemente werden hierfür durch eine Öffnung der Platte 129 eingeführt. Um die Pneumatikkolben 113 herum ist die Feder 111 angeordnet, die den Pneumatikkolben 113 in die untere Position innerhalb des Pneumatikzylinders 109 drückt und so die Spannkraft über das Spannelement 123 auf das obere Halterteil 105-2 überträgt. Durch die Feder 111 wird erreicht, dass diese Funktion innerhalb des begrenzten Bauraums umsetzbar ist. Die Zylinderflächen der Pneumatikzylinder 109 weisen eine doppelte Abdichtung im Bereich des höheren Drucks auf, um diese Funktion dauerhaft zu gewährleisten.

Wird Druckluft in den Pneumatikzylinder geleitet, bewegt sich der Pneumatikkolben 113 nach oben, so dass die von der Feder 111 erzeugte Spannkraft aufgehoben wird und das Halterteil 105-2 mittels einer Drehbewegung vom Halterteil 105-1 gelöst werden kann. Hierdurch wird ein einfacher Aufbau der Pneumatikkolben 113 und der Halterteile 105-1 und 105-2 erreicht.

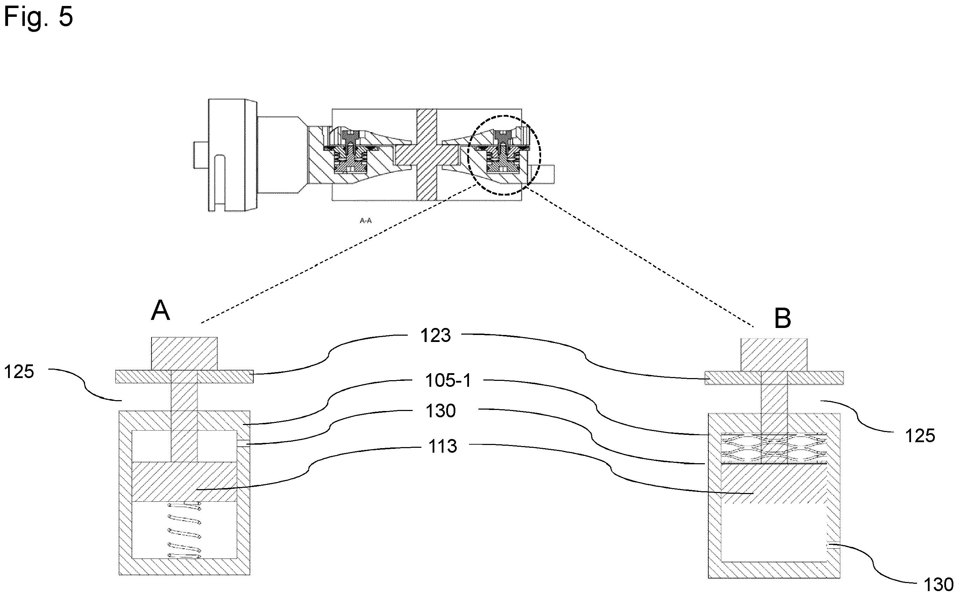

Fig. 5 zeigt eine seitliche vergrößerte Querschnittsansicht des Spannelements 123. Um die Kopplung der zwei Halteteile 105-1 und 105-2 zu ermöglichen, werden vorab die beweglichen Spannelemente 123 mittels der Federkraft nach außen gedrückt und damit die Spannkraft (Druckluftlos) der Spannelemente aufgehoben. Anschließend wird das Halterteil 105-2 gedreht, um einen Anschlag, Reib- und/oder Formschluss zwischen den Kopplungsöffnungen 127 und den Spannelementen 123 zu erreichen. Für den Formschluss kann die Geometrie der Kopplungsöffnungen 127 angepasst werden. Nach dem Koppeln der beiden Halterteile 105-1 und 105-2 kann die Spannkraft auf den dentalen Rohling 103 mittels Druckluft über den Pneumatikkolben 113 über die Spannelemente 123 aufrechterhalten werden. Durch die Pneumatikkolben und deren Beaufschlagung mit Druckluft 131 wird eine Spannvorrichtung 125 zum Ausüben einer Spannkraft zwischen den Halterteilen 105-1 und 105-2 verwirklicht. In der Ausführungsform A wird die Spannkraft durch Druckluft erzeugt.

In der Ausführungsform B wird die Spannkraft durch Federkraft erzeugt. In diesem Fall wird die Spannkraft der Spannelemente 123 mittels Druckluft aufgehoben, damit der dentale Rohling 103 in den Halterteilen 105-1 und 105-2 eingespannt werden kann. Nachdem die Druckluft weggenommen wird, ist der dentale Rohling 123 drucklos durch die Federkraft zwischen den Halterteilen 105-1 und 105-2 eingespannt.

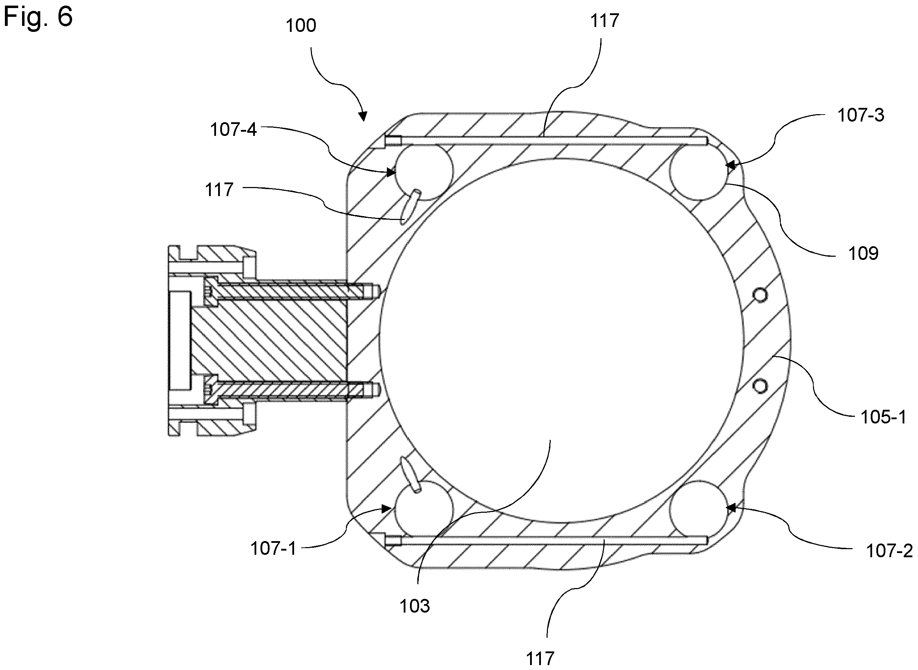

Fig. 6 zeigt eine Querschnittsansicht des Spannhalters 100 für den dentalen Rohling 103 von oben. Die Pneumatikelemente 107-1, ..., 107-4 sind durch vier Pneumatikzylinder 109 mit jeweils einem Pneumatikkolben 113 gebildet, die um die Aussparung 115 herum angeordnet sind. Die Pneumatikzylinder 109 sind mit einem gemeinsamen Luftkanal 117 verbunden, über den die Druckluft in die Pneumatikzylinder 109 der Pneumatikelemente 107-1, ..., 107-4 eingeleitet werden kann. Der Luftkanal 117 ist im Inneren des unteren Halterteils 105-1 oder oberen Halterteils 105-2 angeordnet. Die Pneumatikzylinder 109 können auch durch mittels getrennten Luftkanälen mit Druckluft beaufschlagt werden.

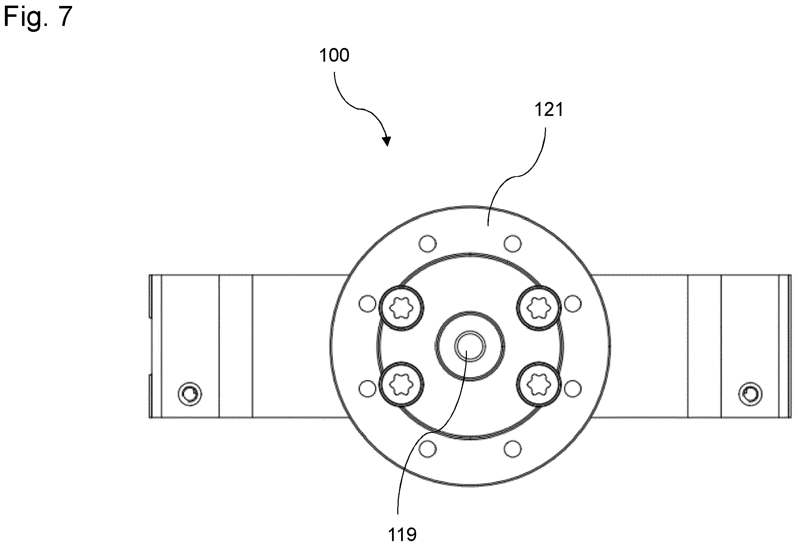

Fig. 7 zeigt eine Seitenansicht des Spannhalters 100 für den dentalen Rohling 103. Der Spannhalter 100 kann auch einen Druckluftanschluss für eine externe Zuführung von Druckluft umfassen, so dass sich die Pneumatikelemente 107-1, ..., 107-4 durch Anschließen einer externen Druckluftzuführung auch dann betätigen lassen, wenn der Spannhalter 100 in der Bearbeitungsmaschine montiert ist. Das erste oder der zweite Halterteil 106-1 oder 105-2 kann mit Pneumatikelementen 107-1, ..., 107-4 ausgestattet sein und die Druckluft mittels eines Geräts zugeführt werden.

In diesem Fall kann eine separate Druckluftvorrichtung oder eine externe Druckluftzuführung vor dem Einbringen des Spannhalters 100 in die Herstellungsvorrichtung verwendet werden. Durch diese kann der Spannhalter 100 auch außerhalb der Herstellungsvorrichtung betätigt werden.

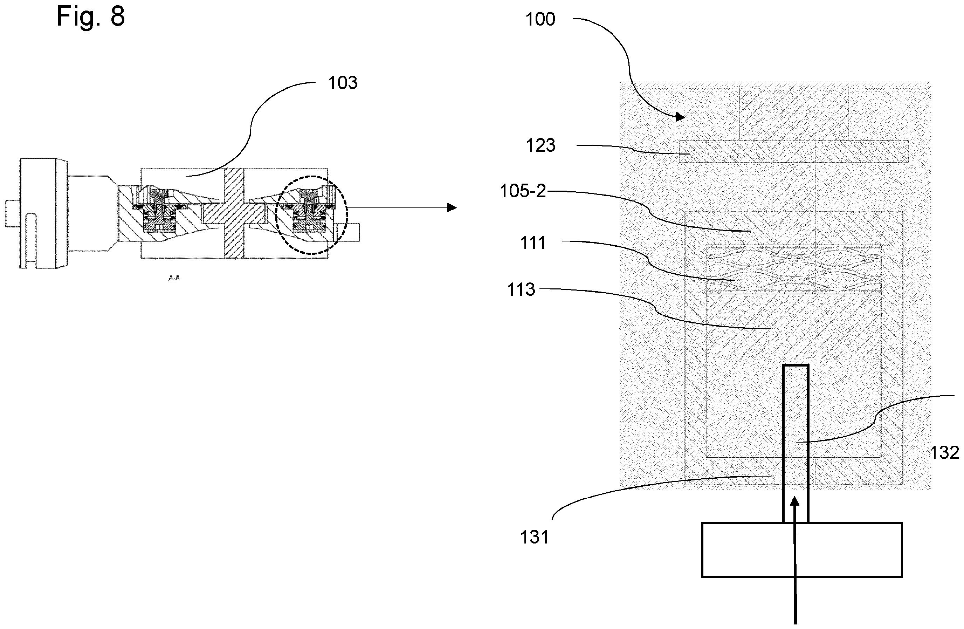

Fig. 8 zeigt eine Seitenansicht des Spannhalters 100 für den dentalen Rohling 103. Die Feder 111 oberhalb des Kolben 113 drückt das Spannelement 123 nach unten, erzeugt somit die Spannkraft die auf den dentalen Rohling 103 zwischen dem ersten Halterteil 105-1 und dem zweiten Halterteil 105-2, wirkt. Durch die Verwendung einer mechanischen Aufhebungsvorrichtung, wie beispielsweise einer Bolzenvorrichtung 135, die durch die Öffnung 135 am Boden eingeschoben werden kann und auf den Kolben 113 einwirken kann, wird die Spannkraft aufgehoben und der Kolben wird nach oben geschoben. Dadurch kann das Halterteil 105-1 vom Spannelement 123 gelöst werden und der dentale Rohling entnommen werden. Auch die mechanischen Aufhebungsvorrichtungen können in der Herstellungsvorrichtung integriert sein oder separat zu der Herstellungsvorrichtung angeordnet sein.

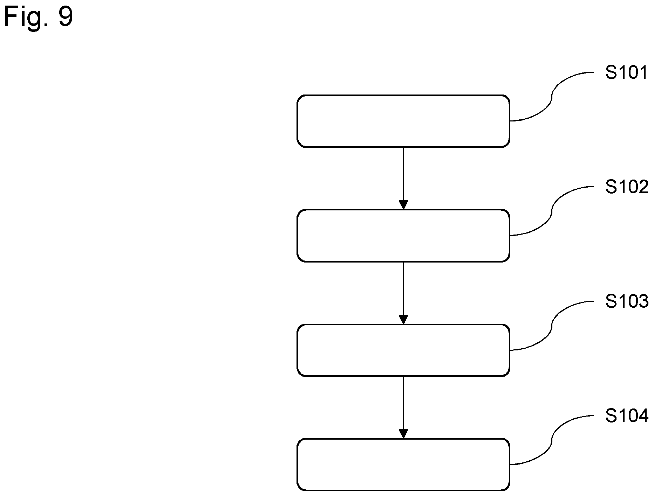

Fig. 9 zeigt ein Blockdiagramm eines Verfahrens zum Einspannen des dentalen Rohlings 103. In Schritt S101 wird der dentale Rohling in die Aussparung 115 in dem ersten Halterteil 105-1 eingelegt. Danach wird in Schritt S102 das erste Halterteil 105-1 mit dem zweiten Halterteil 105-2 für den dentalen Rohling 103 gekoppelt, indem das zweite Halterteil durch eine Drehbewegung formschlüssig bis zum Anschlag mit den Spannelementen 123 verbunden wird. Die druckbeaufschlagten, druckaufgehobenen oder drucklosen Spannelemente 123 befinden sich dabei in einer ausgefahrenen Position.

Durch Krafteinleitung, Ausleiten der Druckluft aus oder Einleiten der Druckluft in die Pneumatikelemente 107-1, ..., 107-4 werden die Spannelemente 123 entlastet oder belastet und die Spannstifte 123 nach innen bewegt. Dabei wird in Schritt S103 die Spannkraft auf den dentalen Rohling 103 zwischen dem ersten Halterteil 105-1 und dem zweiten Halterteil 105-2 durch die Federn 111 oder der Druckluft ausgeübt. Dadurch wird der dentale Rohling 103 ohne Druck oder mit Druck in den Pneumatikelementen 107-1, ..., 107-4 in dem Spannhalter 100 gehalten.

Zum Lösen des oberen Halterteils 105-2 wird erneut die Kraft oder Druckluft in die Pneumatikelemente 107-1, ..., 107-4 eingeleitet oder ausgeleitet, so dass die Spannkraft auf den dentalen Rohling 103 aufgehoben wird und die Spannelemente 123 nach außen gedrückt werden. Anschließend kann das Halterteil 105-2 durch eine Drehbewegung vom Halterteil 105-1 erneut gelöst werden.

Der Spannhalter 100 ermöglicht das werkzeuglose Spannen von dentalen Rohlingen 103 mit nur einer Spannvorrichtung bei optimaler Kraftverteilung und Zuverlässigkeit. Durch den Spannhalter 100 wird die Zeit für den Wechsel der dentalen Rohlinge 103 verkürzt, da hierzu kein Werkzeug erforderlich ist. Für den dentalen Rohling 103 ist nur ein Spannvorgang notwendig und die Zuverlässigkeit der Halterung des dentalen Rohlings ist erhöht. Zudem wird die Handhabung des Spannhalters 100 verbessert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Spannhalter
- 103: dentaler Rohling
- 105: Halterteil
- 107: Pneumatikelement
- 109: Pneumatikzylinder
- 111: Feder
- 113: Pneumatikkolben/Kolben
- 115: Aussparung
- 117: Luftkanal
- 119: Druckluftanschluss
- 121: Schnittstelle
- 123: Spannelement
- 125: Spannvorrichtung
- 127: Kopplungsöffnungen
- 129: Platte
- 131: Druckluft
- 133: Boden
- 135: Bolzenvorrichtung

## Patentansprüche

1. Spannhalter (100) für einen dentalen Rohling (103), mit:
- einem ersten Halterteil (105-1) zum Einlegen des dentalen Rohlings (103);
- einem zweiten Halterteil (105-2) für den dentalen Rohling (103), das mit dem ersten Halterteil (105-1) in Verbindung steht oder koppelbar ist;
- einer Spannvorrichtung (125) zum Ausüben einer Spannkraft auf den dentalen Rohling (103) zwischen dem ersten Halterteil (105-1) und dem zweiten Halterteil (105-2); und
- einem Pneumatikelement (107-1, ..., 107-4) zum Aufheben oder Erzeugen der Spannkraft.

2. Spannhalter (100) nach Anspruch 1, wobei die Spannvorrichtung (125) eine Feder (111) umfasst.

3. Spannhalter (100) nach Anspruch 2, wobei die Feder (111) einen Pneumatikkolben (113) mit der Spannkraft beaufschlagt.

4. Spannhalter (100) nach Anspruch 3, wobei der Pneumatikkolben (113) ein bewegliches Spannelement (123) zum Koppeln mit dem zweiten Halterteil (105-2) umfasst.

5. Spannhalter (100) nach einem der vorangehenden Ansprüche, wobei das Pneumatikelement (107-1, ..., 107-4) innerhalb des ersten oder des zweiten Halterteils (105-1) angeordnet ist.

6. Spannhalter (100) nach einem der vorangehenden Ansprüche, wobei der Spannhalter (100) mehrere Pneumatikelemente (107-1, ..., 107-4) umfasst.

7. Spannhalter (100) nach Anspruch 6, wobei die Pneumatikelemente (107-1, ..., 107-4) um eine Aussparung (115) zum Einlegen des dentalen Rohlings (103) herum verteilt sind.

8. Spannhalter (100) nach Anspruch 8 oder 9, wobei die Pneumatikelemente (107-1, ..., 107-4) durch einen gemeinsamen Luftkanal (117) miteinander verbunden sind.

9. Spannhalter (100) nach einem der vorangehenden Ansprüche, wobei das erste Halterteil (105-1) oder das zweite Halterteil (105-2) für den dentalen Rohling (103) durch eine Drehbewegung oder Rastbewegung mit dem ersten Halterteil (105-1) oder mit dem zweiten Halterteil (105-2) koppelbar ist.

10. Spannhalter (100) nach einem der vorangehenden Ansprüche, wobei der Spannhalter (100) einen Druckluftanschluss (119) umfasst, der in einer mechanischen Schnittstelle (121) zum Befestigen des Spannhalters (100) an einer Bearbeitungsmaschine integriert ist oder einen Druckluftanschluss für eine externe Zuführung von Druckluft.

11. Spannhalter (100) für einen dentalen Rohling (103), mit:
- einem ersten Halterteil (105-1) zum Einlegen des dentalen Rohlings (103);
- einem zweiten Halterteil (105-2) für den dentalen Rohling (103), das mit dem ersten Halterteil (105-1) in Verbindung steht oder koppelbar ist;
- einer Spannvorrichtung (125) zum Ausüben einer Spannkraft auf den dentalen Rohling (103) zwischen dem ersten Halterteil (105-1) und dem zweiten Halterteil (105-2); und
- einem Aufhebungselement (107-1, ..., 107-4) zum Aufheben der Spannkraft.

12. Spannhalter (100) nach Anspruch 11, wobei der Spannhalter (100) mehrere Aufhebungselemente (107-1, ..., 107-4) zum Aufheben der Spannkraft umfasst.

13. Verfahren zum Einspannen eines dentalen Rohlings (103), mit den Schritten:
- Einlegen (S101) des dentalen Rohlings in ein erstes Halterteil (105-1);
- Koppeln (S102) des ersten Halterteils (105-1) mit einem zweiten Halterteil (105-2) für den dentalen Rohling (103) ;
- Ausüben (S103) einer Spannkraft auf den dentalen Rohling (103) zwischen dem ersten Halterteil (105-1) und dem zweiten Halterteil (105-2); und
- Aufheben (S104) der Spannkraft durch ein Aufhebungselement (107-1, ..., 107-4).

14. Verfahren nach Anspruch 13, wobei der dentale Rohling (103) mittels der Spannkraft zwischen dem ersten Halterteil (105-1) und dem zweiten Halterteil (105-2) eingeklemmt ist oder die Druckluft zu mehreren Pneumatikelementen (107-1, ..., 107-4) über einen gemeinsamen Luftkanal (117) zugeführt wird.

15. Verfahren nach Anspruch 13 oder 14, wobei die Aufhebungselemente (107-1, ..., 107-4) über eine externe Vorrichtung betätigt werden, die außerhalb einer Herstellungsvorrichtung angeordnet ist.
